# EUROPEAN PATENT APPLICATION

(11) **EP 2 741 361 A1**
(43) Date of publication of application: **11.06.2014**
(21) Application number: 12819821.5
(22) Date of filing: 01.08.2012
(51) Int. Cl.: H01M 10/052, H01M 4/505, H01M 4/525, H01M 4/62, H01M 10/0562, H01M 10/44

(54) **SOLID SECONDARY BATTERY AND BATTERY SYSTEM**

(30) Priority: 02.08.2011 JP 2011169175
(71) Applicant: TOYOTA JIDOSHA KABUSHIKI KAISHA, Toyota-shi, Aichi-ken, 471-8571 (JP)
(72) Inventor: KODAMA, Masashi, Aichi-ken 471-8571 (JP)
(74) Representative: Kuhnen & Wacker
(86) International application number: PCT/JP2012/069620
(87) International publication number: WO 2013/018840

(57) **Abstract**

A main object of the present invention is to provide a solid secondary battery having a high energy density and a long service life, which can suitably suppress an increase in the battery resistance when charging has been carried out to a high SOC. To attain the object, a solid secondary battery comprising a cathode active material layer containing a cathode active material having lithium nickel-cobalt-manganate represented by a general formula: LiNiₐCo_{b}Mn_{c}O₂ (0.33 < a ≦ 0.6, 0 < b < 0.33, c = 1 - a - b); an anode active material layer containing an anode active material; and a solid electrolyte layer formed between the cathode active material layer and the anode active material layer, wherein at least one of the cathode active material layer and the solid electrolyte layer contains a sulfide solid electrolyte material, is provided.

## Description

### Technical Field

The present invention relates to a solid secondary battery having a higher energy density and a long service life, which can suitably suppress an increase in the battery resistance occurring in a case in which charging has been carried out to a high SOC, and a battery system.

### Background Art

Along with the rapid distribution in recent years of information-related instruments or communication instruments, such as personal computers, video cameras and mobile telephones, great importance has been attached to the development of batteries that are used as power supplies for the instruments. Furthermore, even in the automobile industry and the like, development of high power output and high capacity batteries for electric cars or hybrid cars is in progress. Currently, among various batteries, lithium secondary batteries are paid attention from the viewpoint of having a high energy density.

Since the liquid electrolytes described above contain flammable organic solvents, lithium secondary batteries that are currently available in the market require installation of safety devices that suppress temperature increase at the time of short circuits, or an improvement in terms of structure and material for preventing short circuits. In this regard, it is contemplated that since lithium solid secondary batteries that have been solidified by changing the liquid electrolyte to a solid electrolyte layer, do not use flammable organic solvents in the batteries, simplification of safety devices may be attempted, and the batteries are excellent in terms of production cost and productivity. Furthermore, as a solid electrolyte material used in such a solid electrolyte layer or the like, sulfide solid electrolyte materials are known. Due to their high Li ion conductivity, sulfide solid electrolyte materials are useful for promoting an increase in the power output of batteries.

Furthermore, known examples of a cathode active material used in lithium secondary batteries include oxide cathode active materials. Oxide cathode active materials are useful because the materials are capable of increasing the energy density of lithium secondary batteries, and research has been conducted for a long time. Examples of such an oxide cathode active material disclosed in Patent Document 1 include LiNi_{1/3}Co_{1/3}Mn_{1/3}O₂.

### Citation List

### Patent Literature

Patent Document 1: Japanese Patent Application Publication (JP-A) No. 2011-060649

### Summary of Invention

### Technical Problem

However, in a case in which LiNi_{1/3}Co_{1/3}Mn_{1/3}O₂ is used as the material of a cathode active material layer of a solid secondary battery using the sulfide solid electrolyte material described above, when charging is carried out to a high SOC, there is a problem that the battery resistance increases, and the power output characteristics deteriorate. Also, when the solid secondary battery described above is stored in a state of having a high SOC, there is a problem that the battery resistance increases over time, and the power output characteristics deteriorate.

The present invention was made in view of the problems described above, and it is a main object to provide a solid secondary battery having a high energy density and a long service life, which is capable of suitably suppressing an increase in the battery resistance occurring in a case in which the battery is charged to a high SOC, and to provide a battery system.

### Solution to Problem

The present inventors conducted a thorough investigation in order to achieve the object described above, and as a result, the inventors found that in a solid secondary battery using a cathode active material having lithium nickel-cobalt-manganate in a particular composition range, an increase in the battery resistance occurring in a case in which charging has been carried out to a high SOC, can be suppressed. The present invention was achieved based on these findings.

That is, in the present invention, there is provided a solid secondary battery comprising a cathode active material layer containing a cathode active material having lithium nickel-cobalt manganate represented by a general formula: LiNiₐCo_{b}Mn_{c}O₂ (0.33 < a ≦ 0.6, 0 < b < 0.33, c = 1 - a - b); an anode active material layer containing an anode active material; and a solid electrolyte layer formed between the cathode active material layer and the anode active material layer, characterized in that at least one of the cathode active material layer and the solid electrolyte layer contains a sulfide solid electrolyte material.

According to the present invention, when the cathode active material represented by the formula described above is incorporated, even in a case in which the solid secondary battery is charged to a high SOC, an increase in the battery resistance can be suitably suppressed. Therefore, a decrease in the power output characteristics can be suppressed, and a solid secondary battery having a high energy density and a long service life can be obtained.

In the present invention, there is provided a battery system comprising the solid secondary battery described above, and a charging control unit that performs charging until the cathode active material becomes Li₁₋ₓ(NiₐCo_{b}Mn_{c})O₂ (x ≧ 0.7).

According to the present invention, when a solid secondary battery using the cathode active material described above is used, even in a case in which charging has been carried out to a high SOC by the charging control unit, deterioration of the power output characteristics can be suppressed by suppressing an increase in the battery resistance, and a solid secondary battery having a high energy density and a long service life can be produced.

### Advantageous Effects of Invention

In the present invention, an operating effect that an increase in the battery resistance occurring in a case in which charging has been carried out to a high SOC is suitably suppressed, deterioration of the power output characteristics is suppressed, and a solid secondary battery having a higher energy density and a long service life can be obtained.

### Brief Description of Drawings

FIG. 1 is a schematic cross-sectional diagram illustrating an example of the solid secondary battery of the present invention.
FIG. 2 is a schematic diagram illustrating an example of the battery system of the present invention.
FIG. 3 is a schematic diagram illustrating another example of the battery system of the present invention.
FIG. 4 is a schematic diagram illustrating another example of the battery system of the present invention.
FIG. 5 is a diagram showing the results of an evaluation of the rates of resistance increase of the solid secondary batteries obtained in Example 1, Example 2, and Comparative Example.

### Description of Embodiments

Hereinafter, the solid secondary battery and battery system of the present invention will be described.

### A. solid secondary battery

First, the solid secondary battery of the present invention will be explained. The solid secondary battery of the present invention comprises a cathode active material layer containing a cathode active material having lithium nickel-cobalt-manganate represented by a general formula: LiNiₐCo_{b}Mn_{c}O₂ (0.33 < a ≦ 0.6, 0 < b < 0.33, c = 1 - a - b) ; an anode active material layer containing an anode active material; and a solid electrolyte layer formed between the cathode active material layer and the anode active material layer, characterized in that at least one of the cathode active material layer and the solid electrolyte layer contains a sulfide solid electrolyte material.

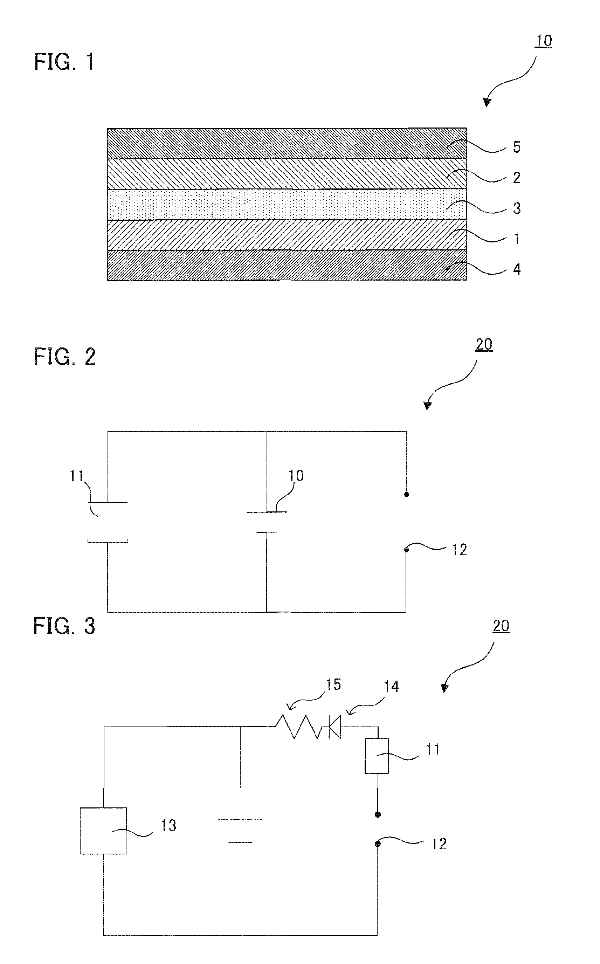

FIG. 1 is a schematic cross-sectional diagram illustrating an example of the solid secondary battery of the present invention. The solid secondary battery 10 illustrated in FIG. 1 comprises a cathode active material layer 1, an anode active material layer 2, and a solid electrolyte layer 3 formed between the cathode active material layer 1 and the anode active material layer 2. Furthermore, the solid secondary battery 10 usually comprises a cathode current collector 4 that collects the current of the cathode active material layer 1, and an anode current collector 5 that collects the current of the anode active material layer 2.

According to the present invention, when the solid secondary battery has the cathode active material represented by the formula described above, even when the solid secondary battery has been charged to a high SOC, an increase in the battery resistance can be suitably suppressed. Therefore, deterioration of the power output characteristics can be suppressed, and a solid secondary battery having a higher energy density and a long service life can be obtained.

Incidentally, the SOC (state of charge) is an index representing the state of charge of a battery, and is a value indicated as a ratio of the residual charge level with respect to the fully charged state.

As discussed above, in a solid secondary battery having a configuration in which LiNi_{1/3}Co_{1/3}Mn_{1/3}O₂ that has been traditionally used as a cathode active material is in contact with a sulfide solid electrolyte material, there is a problem that when charging has been carried out to a high SOC, the battery resistance increases, and the power output characteristics deteriorate. The reason for this is speculated to be as follows.

That is, it is contemplated that among the various constituents of LiNi_{1/3}Co_{1/3}Mn_{1/3}O₂, cobalt has a property of being easily sulfurized as compared with nickel or manganese. Furthermore, it is speculated that when a solid secondary battery is in a state with a high SOC, the cathode potential increases, and sulfurization of cobalt occurs more significantly. Accordingly, it is speculated that in a case in which a solid secondary battery having the configuration described above is charged to a high SOC, the battery resistance increases as a result of sulfurization of cobalt in the cathode active material, and the power output characteristics are deteriorated.

On the other hand, it is preferable that the solid secondary battery of the present invention have a configuration in which a compound of a general formula: LiNiₐCo_{b}Mn_{c}O₂ (0.33 < a ≦ 0.6, 0 < b < 0.33, c = 1 - a - b) as a cathode active material is in contact with a sulfide solid electrolyte material. The reason why an increase in the battery resistance can be suppressed when such a solid secondary battery is charged to a high SOC, is speculated to be as follows.

That is, in a cathode active material represented by a general formula: LiNiₐCo_{b}Mn_{c}O₂ (0.33 < a ≦ 0.6, 0 < b < 0.33, c = 1 - a - b), as indicated by the relationship: 0.33 < a ≦ 0.6, the composition ratio of nickel is larger than that of LiNi_{1/3}Co_{1/3}Mn_{1/3}O₂ described above. Here, it is considered that nickel has a property of being sulfurized with more difficulties compared to cobalt. In the present invention, since the composition ratio of cobalt can be made small as represented by the relationship: 0 < b < 0.33, by increasing the composition ratio of nickel that is difficult to be sulfurized, it is speculated that even in a case in which charging has been carried out to a high SOC, an increase in the battery resistance caused by sulfurization of cobalt can be reduced.

Incidentally, since it is contemplated that manganese also has a property of being sulfurized with more difficulties compared to cobalt, it may be considered to make the composition ratio of manganese larger than the composition ratio of LiNi_{1/3}Co_{1/3}Mn_{1/3}O₂ described above. However, there is a concern that when the composition ratio of manganese is large, the energy density of the solid secondary battery may be low. On the other hand, when the composition ratio of nickel with respect to the lithium nickel-cobalt-manganate described above is made large, the composition ratio of manganese can also be decreased. Therefore, a solid secondary battery which is advantageous in terms of energy can be obtained.

Incidentally, when LiNi_{1/3}Co_{1/3}Mn_{1/3}O₂ described above is used in the cathode active material layer of a secondary battery using a liquid electrolyte, even in a case in which charging has been carried out to a high SOC, deterioration of the power output characteristics caused by an increase in the battery resistance is not confirmed. Therefore, the present invention is an invention that solves the problems characteristic to solid secondary batteries which use sulfide solid electrolyte materials.

Hereinafter, various configurations of the solid secondary battery of the present invention will be described.

### 1. Cathode active material layer

First, the cathode active material layer according to the present invention will be explained.

### (1) Cathode active material

The cathode active material according to the present invention has lithium nickel-cobalt-manganate represented by a general formula: LiNiₐCo_{b}Mn_{c}O₂ (0.33 < a ≦ 0.6, 0 < b < 0.33, c = 1 - a - b).

The composition ratio "a" of nickel in the cathode active material represented by the above formula is not particularly limited as long as the relationship: 0.33 < a ≦ 0.6 is satisfied, but among others, the composition ratio is preferably such that 0.5 ≦ a ≦ 0.6. It is because when the composition ratio "a" of nickel is less than the range described above, there is a possibility that it may be difficult to make the composition ratio "b" of cobalt of the cathode active material small to the extent that deterioration of the power output characteristics can be suppressed. It is also because when the composition ratio "a" is more than the range described above, there is a possibility that it may be difficult to obtain lithium nickel-cobalt-manganate itself.

The composition ratio "b" of cobalt in the cathode active material represented by the above-described formula is not particularly limited as long as the relationship: 0 < b < 0.33 is satisfied, but among others, the composition ratio is preferably such that 0.10 ≦ b ≦ 0.30, and particularly preferably 0.20 ≦ b ≦ 0.25. It is because when the composition ratio "b" of cobalt is less than the range described above, there is a possibility that it may be difficult to obtain lithium nickel-cobalt-manganate itself, and it is because when the composition ratio "b" is more than the range described above, there is a possibility that it may be difficult to suppress deterioration of the power output characteristics.

The composition ratio "c" of manganese in the cathode active material represented by the above-described formula is not particularly limited as long as the relationship: c = 1 - a - b is satisfied, but the composition ratio is preferably such that 0.1 ≦ c ≦ 0.5, among others, 0.1 ≦ c ≦ 0.4, and particularly preferably 0.1 ≦ c ≦ 0.25. It is because when the composition ratio "c" of cobalt is less than the range described above, there is a possibility that it may be difficult to obtain lithium nickel-cobalt-manganate itself, and it is because when the composition ratio "b" is more than the range described above, there is a possibility that it may be difficult to make the energy density of the solid secondary battery sufficiently large.

Furthermore, the cathode active material represented by the above-described formula is specifically preferably LiNi_{1/2}Co_{1/4}Mn_{1/4}O₂ or LiNi_{3/5}Co_{1/5}Mn_{1/5}O₂, and particularly preferably LiNi_{3/5}Co_{1/5}Mn_{1/5}O₂. When a cathode active material having lithium nickel-cobalt-manganate having the composition described above is used in a lithium battery, an increase in the battery resistance caused by use or storage at a high SOC can be suitably suppressed.

The shape of the cathode active material according to the present invention may be, for example, a particulate shape. The average particle size (D₅₀) of the cathode active material is preferably, for example, in the range of 0.1 µm to 50 µm. Incidentally, the average particle size can be determined using a particle size distribution analyzer.

Furthermore, the cathode active material according to the present invention is preferably brought into contact with a sulfide solid electrolyte material. More specifically, the cathode active material may be in contact with a sulfide solid electrolyte material that is contained in a cathode active material layer, or may be in contact therewith at the interface between a solid electrolyte layer and a cathode active material layer in which the sulfide solid electrolyte material is used.

The cathode active material can be obtained by a general method for forming lithium nickel-cobalt-manganate.

### (2) Cathode active material layer

The cathode active material layer according to the present invention is a layer containing at least the cathode active material described above, and if necessary, the cathode active material layer may further contain at least one a solid electrolyte material, a conductive material and a binding material. Furthermore, the content of the cathode active material in the cathode active material layer is not particularly limited, but for example, the content is preferably in the range of 40% by weight to 99% by weight.

The cathode active material is preferably coated with an ion conductive oxide. It is because formation of a highly resistant coating film at the interface between the cathode active material and another material (for example, a solid electrolyte material) can be prevented. Examples of Li ion conductive oxide include a material represented by formula: LiₓAO_{y} (in which A represents B, C, Al, Si, P, S, Ti, Zr, Nb, Mo, Ta or W; and "x" and "y" represent positive numbers). Specific examples include Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, and Li₂WO₄. Furthermore, the Li ion conductive oxide may be a composite oxide. For such a composite oxide, arbitrary combinations of the compounds described above can be employed, but specific examples include Li₄SiO₄-Li₃BO₃ and Li₄SiO₄-Li3PO₄. Furthermore, the ion conductive oxide may coat at least a portion of the cathode active material, or may coat the entire surface of the cathode active material. Also, the thickness of the ion conductive oxide that coats the cathode active material is, for example, preferably in the range of 0.1 nm to 100 nm, and more preferably in the range of 1 nm to 20 nm. Incidentally, examples of the method for measuring the thickness of an ion conductive oxide include transmission electron microscopy (TEM).

The cathode active material layer may contain a solid electrolyte material. When the solid electrolyte material is added, ion conductivity of the cathode active material layer can be enhanced. Incidentally, the details of the solid electrolyte material will be described in section "3. Solid electrolyte layer" that will be described below. The content of the solid electrolyte material in the cathode active material layer is not particularly limited, but for example, the content is preferably in the range of 10% by weight to 90% by weight. Incidentally, according to the present invention, since the cathode active material has a configuration of being in contact with a sulfide solid electrolyte material, at least one of the cathode active material layer and the solid electrolyte layer that will be described below contains a sulfide solid electrolyte material.

The cathode active material layer may contain a conductive material. By adding a conductive material, electron conductivity of the cathode active material layer can be enhanced. Examples of the conductive material include acetylene black, Ketjen black, and carbon fiber. The cathode active material layer preferably contains a binding material. It is because a cathode active material layer having excellent flexibility may be obtained. Examples of the binding material include fluorine-containing binding materials such as PTFE and PVDF. The thickness of the cathode active material layer is, for example, preferably in the range of 0.1 µm to 1000 µm, and more preferably in the range of 1 µm to 100 µm.

### 2. Anode active material layer

The anode active material layer according to the present invention is a layer containing at least an anode active material, and may further contain at least one of a solid electrolyte material, a conductive material and a binding material as necessary. The kind of the anode active material is not particularly limited as long as the material is capable of storage and release of metal ions. Examples of the anode active material include a carbon active material, an oxide active material and a metal active material. The carbon active material is not particularly limited as long as it contains carbon, and examples thereof include meso-carbon microbeads (MCMB), highly oriented graphite (HOPG), hard carbon, and soft carbon. Examples of the oxide active material include Nb₂O₅, Li₄Ti₅O₁₂, and SiO. Examples of the metal active material include In, Al, Si and Sn. Furthermore, an Li-containing metal active material may also be used as the anode active material. The Li-containing metal active material is not particularly limited as long as it is an active material containing at least Li, and the material may be Li metal or may be an Li alloy. Examples of the Li alloy include alloys containing Li and at least one of In, Al, Si and Sn.

Examples of the shape of the anode active material include a particulate shape and a thin film shape. The average particle size (D₅₀) of the anode active material is, for example, preferably in the range of 1 nm to 100 µm, and more preferably in the range of 10 nm to 30 µm. Furthermore, the content of the anode active material in the anode active material layer is not particularly limited, but for example, the content is preferably in the range of 40% by weight to 99% by weight.

The anode active material layer may contain a solid electrolyte material. By adding a solid electrolyte material, ion conductivity of the anode active material layer can be enhanced. Incidentally, the details of the solid electrolyte material will be described in section "3. Solid electrolyte layer" that will be described below. The content of the solid electrolyte material in the anode active material layer is not particularly limited, but for example, the content is preferably in the range of 10% by weight to 90% by weight. Incidentally, regarding the conductive material and the binding material used in the anode active material layer, the same matters described in the section "1. Cathode active material layer" are applicable, and thus, further description will not be repeated here. Also, the thickness of the anode active material layer is, for example, preferably in the range of 0.1 µm to 1000 µm, and more preferably in the range of 1 µm to 100 µm.

### 3. Solid electrolyte layer

The solid electrolyte layer according to the present invention is a layer containing at least a solid electrolyte material. Examples of the solid electrolyte material include inorganic solid electrolyte materials such as a sulfide solid electrolyte material, an oxide solid electrolyte material, and a nitride solid electrolyte material. A sulfide solid electrolyte material is preferable from the viewpoint of having higher ion conductivity as compared with an oxide solid electrolyte material, and an oxide solid electrolyte material is preferable from the viewpoint of having higher chemical stability as compared with a sulfide solid electrolyte material. Furthermore, the solid electrolyte material according to the present invention may be an inorganic solid electrolyte material containing halogen. In the present invention, it is particularly preferable to use a sulfide solid electrolyte material.

Incidentally, as described above, in the present invention, at least one of the cathode active material layer and the solid electrolyte layer contains a sulfide solid electrolyte material.

A sulfide solid electrolyte material usually contains Li that serves as a conducting ion, and sulfur (S). Particularly, it is preferable that the sulfide solid electrolyte material contain Li, A (in which A represents P, Si, Ge, Al or B), and S. Furthermore, the sulfide solid electrolyte material may contain halogen such as Cl, Br or I. When the sulfide solid electrolyte material contains halogen, ion conductivity can be enhanced. Also, the sulfide solid electrolyte material may contain O. When the sulfide solid electrolyte material contains O, chemical stability can be enhanced.

Examples of a sulfide solid electrolyte material having Li ion conductivity include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (in which "m" and "n" represent positive numbers; and Z represents any one of Ge, Zn and Ga), Li₂S-GeS₂, Li₂S-SiS₂-Li₃PO₄, and Li₂S-SiS₂-LiₓMO_{y} (in which "x" and "y" represent positive numbers; and M represents any one of P, Si, Ge, B, Al, Ga and In). Incidentally, the description of "Li₂S-P₂S₅" means a sulfide solid electrolyte material formed using a raw material composition containing Li₂S and P₂S₅, and the same also applies to other descriptions.

Furthermore, it is preferable that the sulfide solid electrolyte material do not substantially contain Li₂S. It is because a sulfide solid electrolyte material having high chemical stability can be provided. When Li₂S reacts with water, hydrogen sulfide is generated. For example, when the proportion of Li₂S contained in the raw material composition is large, Li₂S is likely to be left over. The state of "(do) not substantially contain Li₂S" can be confirmed by X-ray diffraction. Specifically, when peaks for Li₂S (2θ = 27.0°, 31.2°, 44.8°, and 53.1°) do not appear, it can be considered that the material does not substantially contain Li₂S.

Furthermore, it is preferable that the sulfide solid electrolyte material do not substantially contain cross-linking sulfur. It is because a sulfide solid electrolyte material having high chemical stability can be provided. The term "cross-linking sulfur" means cross-linking sulfur in a compound formed by a reaction between Li₂S and sulfide of the component A. For example, cross-linking sulfur having an S₃P-S-PS₃ structure formed by a reaction between Li₂S and P₂S₅ corresponds to this. Such cross-linking sulfur is likely to react with water, and is likely to generate hydrogen sulfide. Furthermore, the state of "(do) not substantially contain cross-linking sulfur" can be confirmed by an analysis by Raman spectrophotometry. For example, in the case of a sulfide solid electrolyte material of the Li₂S-P₂S₅ system, a peak for the S₃P-S-PS₃ structure usually appears at 402 cm⁻¹. Therefore, it is preferable that this peak be undetected. Furthermore, a peak for the PS₄³⁻ structure usually appears at 417 cm⁻¹. In the present invention, it is preferable that the intensity I₄₀₂ at 402 cm⁻¹ be smaller than the intensity I₄₁₇ at 417 cm⁻¹. For example, more specifically, the intensity I₄₀₂ is preferably 70% or less, more preferably 50% or less, and even more preferably 35% or less, relative to the intensity I₄₁₇.

Furthermore, when the sulfide solid electrolyte material is formed using a raw material composition containing Li₂S and P₂S₅, the proportion of Li₂S relative to the sum of Li₂S and P₂S₅ is, for example, preferably in the range of 70 mol% to 80 mol%, more preferably in the range of 72 mol% to 78 mol%, and even more preferably in the range of 74 mol% to 76 mol%. It is because a sulfide solid electrolyte material having an ortho-composition or a composition close to that can be provided, and a sulfide solid electrolyte material having high chemical stability can be provided. Here, the term ortho generally means that a compound having the highest degree of hydration among the oxoacids obtainable by hydrating an identical oxide. In the present invention, a crystal composition in which Li₂S has been added to the largest extent to a sulfide is referred to as the ortho-composition. In the Li₂S-P₂S₅ system, Li₃PS₄ corresponds to the ortho-composition. In the case of a sulfide solid electrolyte material of the Li₂S-P₂S₅ system, the ratio of Li₂S and P₂S₅ for obtaining the ortho-composition is, on a molar basis, such that Li₂S:P₂S₅ = 75:25. Incidentally, even in a case in which Al₂S₃ or B₂S₃ is used instead of P₂S₅ in the raw material composition described above, the same preferable range is applicable. In the Li₂S-Al₂S₃ system, Li₃AlS₃ corresponds to the ortho-composition, and in the Li₂S-B₂S₃ system, Li₃BS₃ corresponds to the ortho-composition.

Furthermore, when the sulfide solid electrolyte material is formed using a raw material composition containing Li₂S and SiS₂, the proportion of Li₂S relative to the sum of Li₂S and SiS₂ is, for example, preferably in the range of 60 mol% to 72 mol%, more preferably in the range of 62 mol% to 70 mol%, and even more preferably in the range of 64 mol% to 68 mol%. It is because a sulfide solid electrolyte material having the ortho-composition or a composition close thereto can be provided, and a sulfide solid electrolyte material having high chemical stability can be provided. In the Li₂S-SiS₂ system, Li₄SiS₄ corresponds to the ortho-composition. In the case of a sulfide solid electrolyte material of the Li₂S-SiS₂ system, the ratio of Li₂S and SiS₂ for obtaining the ortho-composition is, on a molar basis, such that Li₂S:SiS₂ = 66.6:33.3. Incidentally, even in the case of using GeS₂ instead of SiS₂ in the raw material composition described above, the same preferable range is applicable. In the Li₂S-GeS₂ system, Li₄GeS₄ corresponds to the ortho-composition.

Furthermore, when the sulfide solid electrolyte material is formed using a raw material composition containing LiX (X = Cl, Br or I), the proportion of LiX is, for example, preferably in the range of 1 mol% to 60 mol%, more preferably in the range of 5 mol% to 50 mol%, and even more preferably in the range of 10 mol% to 40 mol%. Furthermore, when the sulfide solid electrolyte material is formed using a raw material composition containing Li₂O, the proportion of Li₂O is, for example, preferably in the range of 1 mol% to 25 mol%, and more preferably in the range of 3 mol% to 15 mol%.

Furthermore, the sulfide solid electrolyte material may be a sulfide glass, may be a crystallized sulfide glass, or may be a crystalline material obtainable by a solid phase method. Incidentally, the sulfide glass can be obtained by, for example, subjecting the raw material composition to mechanical milling (ball mill or the like). Furthermore, the crystallized sulfide glass can be obtained by, for example, subjecting the sulfide glass to a heat treatment at a temperature of higher than or equal to the crystallization temperature. Furthermore, when the sulfide solid electrolyte material is an Li ion conductor, the Li ion conductivity at normal temperature is, for example, preferably 1 × 10⁻⁵ S/cm or higher, and more preferably 1 × 10⁻⁴ S/cm or higher.

On the other hand, examples of an oxide solid electrolyte material having Li ion conductivity include compounds having a NASICON type structure. Examples of the compound having a NASICON type structure include compounds represented by formula: Li₁₊ₓAlₓGe₂₋ₓ(PO₄)₃ (0 ≦ x ≦ 2). Among them, the oxide solid electrolyte material is preferably Li_{1.5}Al_{0.5}Ge_{1.5}(PO₄)₃. Furthermore, other examples of the compound having a NASICON type structure include compounds represented by formula: Li₁₊ₓAlₓTi₂₋ₓ(PO₄)₃ (0 ≦ x ≦ 2). Among them, the oxide solid electrolyte material is preferably Li_{1.5}Al_{0.5}Ti_{1.5}(PO₄)₃. Furthermore, other examples of the oxide solid electrolyte material include LiLaTiO (for example, Li_{0.34}La_{0.51}TiO₃), LiPON (for example, Li_{2.9}PO_{3.3}N_{0.46}), and LiLaZrO (for example, Li₇La₃Zr₂O₁₂).

Examples of the shape of the solid electrolyte material include a particulate shape and a thin film shape. The average particle size (D₅₀) of the solid electrolyte material is, for example, preferably in the range of 1 nm to 100 µm, and among others, in the range of 10 nm to 30 µm. The content of the solid electrolyte material in the solid electrolyte layer is, for example, preferably 60% by weight or more, among others, 70% by weight or more, and particularly preferably 80% by weight or more. The solid electrolyte layer may contain a binding material, or may be composed only of a solid electrolyte material. The thickness of the solid electrolyte layer may vary greatly depending on the configuration of the battery, but for example, the thickness is preferably in the range of 0.1 µm to 1000 µm, and more preferably in the range of 1 µm to 100 µm.

### 4. Other members

The solid secondary battery of the present invention may further comprise a cathode current collector that collects the current of the cathode active material layer, and an anode current collector that collects the current of the anode active material layer. Examples of the material for the cathode current collector include SUS, aluminum, nickel, iron, titanium, and carbon. Examples of the material for the anode active current collector include SUS, copper, nickel, and carbon. Furthermore, for the battery case used in the present invention, a general battery case for solid secondary batteries can be used. Examples of the battery case include battery cases made of SUS.

### 5. Solid secondary battery

Since the solid secondary battery of the present invention is capable of repeated charging and discharging, the solid secondary battery is useful as, for example, a battery for vehicles. Examples of the shape of the solid secondary battery include a coin type, a laminate type, a cylinder type, and a cube type. Furthermore, the method for producing the solid secondary battery is not particularly limited as long as it is a method capable of obtaining the solid secondary battery described above, and methods similar to general production methods for solid secondary batteries can be used. For example, a press method, a coating method, a deposition method, and a spray method can be used.

### B. Battery system

Next, the battery system of the present invention will be explained. The battery system of the present invention comprises the solid secondary battery described in the above section "B. Solid secondary battery", and a charging control unit that performs charging until the cathode active material becomes Li₁₋ₓ(NiₐCo_{b}Mn_{c}) O₂ (x ≧ 0.7).

FIG. 2 is a schematic diagram illustrating an example of the battery system of the present invention. The battery system 20 illustrated in FIG. 2 comprises a solid secondary battery 10 and a charging control unit 11. Furthermore, the battery system usually includes a connection terminal 12 for connection to a power supply for the purpose of charging. Incidentally, since the specific configuration of the solid secondary battery 10 is similar to that of FIG. 1, further description will not be repeated here.

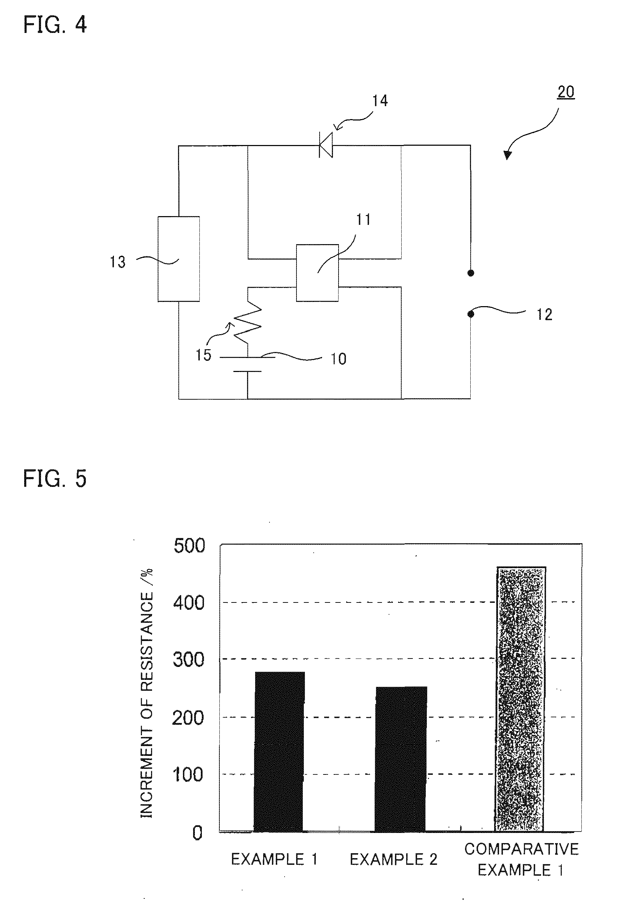

Furthermore, FIG. 3 and FIG. 4 are schematic diagrams illustrating other examples of the battery system of the present invention. As illustrated in FIG. 3 and FIG. 4, the battery system 20 may include, in addition to the solid secondary battery 10 and the charging control unit 11, for example, a load 13, a diode 14, and a resistance 15. Incidentally, in regard to these optional members, the same ones used in general battery systems can be applied.

According to the present invention, since the battery system comprises a solid secondary battery using the cathode active material described above, even in a case in which charging has been carried out by the charging control unit until the cathode active material becomes Li₁₋ₓ (NiₐCo_{b}Mn_{c})O₂ (x ≧ 0.7), that is, to a high SOC, an increase in the battery resistance can be suppressed, deterioration of the power output characteristics can be suppressed, and a solid secondary battery having a high energy density and a long service life can be produced.

Hereinafter, the details of the battery system of the present invention will be described.

### 1. Solid secondary battery

In regard to the solid secondary battery according to the present invention, since the same matters described in the above section "A. Solid secondary battery" can be applied, further description will not be repeated here.

### 2. Charging control unit

The charging control unit according to the present invention will be explained. The charging control unit according to the present invention is not particularly limited as long as the unit is capable of performing charging until the cathode active material becomes Li₁₋ₓ(NiₐCo_{b}Mn_{c})O₂ (x ≧ 0.7), while it is particularly preferable that x ≧ 0.72. It is because when the value of "x" is greater than or equal to the above-mentioned value, the solid secondary battery according to the present invention can be made to have a higher energy density. It is because when the value of "x" is greater than the value described above, there is a risk that other constituents of the solid secondary battery may deteriorate.

Incidentally, the value of "x" is, for example, preferably 0.8 or less, and more preferably 0.78 or less. It is because when the value of "x" is greater than the value described above, it may be difficult to maintain the crystal structure of lithium nickel-cobalt-manganate.

Here, "x" is a value representing the theoretical capacity of the cathode active material having lithium nickel-cobalt-manganate represented by a general formula: LiNiₐCo_{b}Mn_{c}O₂ (0.33 < a ≦ 0.6, 0 < b < 0.33, c = 1 - a - b).

The charging control unit according to the present invention can be constructed similarly to the charging control unit of general solid secondary batteries. The charging control unit may have a configuration including, for example, a voltage measuring unit that measures the voltage of the solid secondary battery described above; and a switch unit that ends charging when the voltage measuring unit detects a voltage at which the value of "x" satisfies the relationship described above.

Incidentally, the present invention is not intended to be limited to the embodiment described above. The above-described embodiment is for illustrative purposes, and any embodiment which has a configuration substantially identical to the technical idea described in the claims of the present invention and provides the same operating effects, is to be included in the technical scope of the present invention.

### Examples

### [Example 1]

### (Production of sulfide solid electrolyte material)

Li₂S (Nippon Chemical Industrial Co., Ltd.) and P₂S₅ (Sigma-Aldrich Co., LLC.) were used as starting raw materials. Subsequently, in a glove box in an Ar atmosphere (dew point: -70°C), Li₂S and P₂S₅ were weighed so as to obtain a molar ratio of 75 Li₂S·25 P₂S₅ (Li₃PS₄, ortho-composition), and the compounds were mixed in an agate mortar for 5 minutes. Thus, 2 g of a raw material composition (Li₂S = 0.7656 g, P₂S₅ = 1.2344 g) was obtained. 2 g of this raw material composition was introduced into the vessel (45 cc, made of ZrO₂) of a planetary ball mill, dehydrated heptane (amount of water: 30 ppm or less, 4 g) was introduced therein, and ZrO₂ balls (φ = 5 mm, 53 g) were introduced therein. The vessel was completely sealed (Ar atmosphere). This vessel was mounted in a planetary ball mill machine (P7™ manufactured by Fritsch Japan Co., Ltd.), and mechanical milling was performed for 40 hours at a speed of bench rotation of 370 rpm. Thereafter, the sample thus obtained was dried in a vacuum, and thus a vitreous sulfide solid electrolyte material was obtained.

### (Production of solid secondary battery)

Lithium nickel-cobalt-manganate (LiNi_{1/2}Co_{1/4}Mn_{1/4}O₂) was used as the cathode active material, and the lithium nickel-cobalt-manganate was subjected to a surface treatment with LiNbO₃. Subsequently, 12.03 mg of the cathode active material, 0.51 mg of VGVF (Showa Denko K.K.), and 5.03 mn of the sulfide solid electrolyte material described above were weighed and mixed, and thus a cathode mix was obtained.

9.06 mg of graphite (Mitsubishi Chemical Corp.) as an anode active material, and 8.24 mg of the sulfide solid electrolyte material described above were weighed and mixed, and thus an anode mix was obtained.

18 mg of the sulfide solid electrolyte material described above was weighed and placed in a mold having a size of 1 cm², and the material was pressed at a pressure of 1 ton/ cm². Thus, a solid electrolyte layer was formed. Subsequently, 17.57 mg of the cathode mix described above was placed on one surface side of the solid electrolyte layer thus obtained, and the assembly was pressed at a pressure of 1 ton/cm². Thus, a cathode active material layer was formed. Subsequently, 17.3 mg of the anode mix was weighed and placed on the other surface side of the solid electrolyte layer, and the assembly was pressed at a pressure of 4 ton/cm². Thus, an anode active material layer was formed, and a power generating element was obtained. SUS304 (cathode current collector and anode current collector) were disposed on the two surfaces of the power generating element thus obtained, and thus a solid secondary battery was obtained.

### [Example 2]

Lithium nickel-cobalt-manganate (LiNi_{3/5}Co_{1/5}Mn_{1/5}O₂) was used as the cathode active material, and the lithium nickel-cobalt-manganate was subjected to a surface treatment with LiNbO₃. Subsequently, 12.03 mg of the cathode active material, 0.51 mg of VGVF (Showa Denko K.K.), and 5.03 mg of the sulfide solid electrolyte material according to Example 1 were weighed and mixed, and thus a cathode mix was obtained.

A solid secondary battery was obtained in the same manner as in Example 1, except that the cathode mix described above was used.

### [Comparative Example]

Lithium nickel-cobalt-manganate (LiNi_{1/3}Co_{1/3}Mn_{1/3}O₂) was used as the cathode active material, and the lithium nickel-cobalt-manganate was subjected to a surface treatment with LiNbO₃. Subsequently, 12.03 mg of the cathode active material, 0.51 mg of VGVF (Showa Denko K.K.), and 5.03 mg of the sulfide solid electrolyte material according to Example 1 were weighed and mixed, and thus a cathode mix was obtained.

A solid secondary battery was obtained in the same manner as in Example 1, except that the cathode mix described above was used.

### [Evaluation]

### (Test on deterioration by storage at 60°C)

The solid secondary batteries thus obtained were CC/CV charged (charged to a SOC of 75%) to 200 mAh/g at 0.3 mA, and an impedance analysis was carried out using an impedance analyzer (manufactured by Solartron Group) to determine the resistance (initial). The solid secondary batteries after the resistance measurement were stored at 60°C for 30 days. After the storage for 30 days, the batteries were completely discharged, and were charged again to an arbitrary voltage. Then, the resistance was measured.

The increment of resistance of the resistance after 30 days was calculated relative to the resistance (initial). The results are presented in FIG. 5. As shown in FIG. 5, in the Comparative Example, the resistance after 30 days increased to 4.6 times as compared with the initial value; while in Example 1 and Example 2, the resistance after 30 days could be suppressed to about 2.5 times as compared with the initial values.

### Reference Signs List

- 1: cathode active material layer
- 2: anode active material layer
- 3: solid electrolyte layer
- 4: cathode current collector
- 5: anode current collector
- 10: solid secondary battery
- 11: charging control unit
- 20: battery system

## Claims

1. A solid secondary battery comprising:
a cathode active material layer containing a cathode active material having lithium nickel-cobalt-manganate represented by a general formula: LiNiₐCo_{b}Mn_{c}O₂ (0.33 < a ≦ 0.6, 0 < b < 0.33, c = 1 - a - b);
an anode active material layer containing an anode active material; and
a solid electrolyte layer formed between the cathode active material layer and the anode active material layer,
**characterized in that** at least one of the cathode active material layer and the solid electrolyte layer contains a sulfide solid electrolyte material.

2. A battery system comprising:
the solid secondary battery according to claim 1; and
a charging control unit that performs charging until the cathode active material becomes Li₁₋ₓ(NiₐCo_{b}Mn_{c})O₂ (x ≧ 0.7).
